# EUROPÄISCHE PATENTSCHRIFT

(11) **EP 1 106 431 B1**
(45) Veröffentlichungstag und Bekanntmachung des Hinweises auf die Patenterteilung: **11.06.2003**
(21) Anmeldenummer: 99124611.7
(22) Anmeldetag: 10.12.1999
(51) Int. Cl.: B60P 1/44

(54) **Ladebordwandsystem**
Loading tailgate system
Système de hayon élévateur

(43) Veröffentlichungstag der Anmeldung: 13.06.2001
(73) Patentinhaber: Sörensen Hydraulik Zweigniederlassung, Ulfborg, Filial af Sörensen Hydraulik GmbH, Tyskland, 6990 Ulfborg (DK)
(72) Erfinder: Jensen, Jens Herman, 6990 Ulfborg (DK)
(74) Vertreter: Niedmers, Ole, Dipl.-Phys.

(56) Entgegenhaltungen:
- EP-A- 0 808 747

## Beschreibung

Die Erfindung betrifft ein Ladebordwandsystem zur Befestigung an Fahrzeugen, insbesondere Lastkraftfahrzeugen, umfassend ein Hubtragwerk, eine im wesentlichen plattenförmige Ladebordwand zum Heben und Absenken einer Last und wenigstens einen Hubaktuator zum Heben und Senken der Ladebordwand, wobei das Hubtragwerk wenigstens einen Tragarm umfaßt, der mit seinem ersten Ende über eine erste Drehachse am Fahrzeug drehbar befestigt ist und über eine am gegenüberliegenden zweiten Ende des Tragarms angeordnete zweite Drehachse mit einem ersten Ende des Hubaktuators drehbar befestigt ist und wobei das zweite Ende des Hubaktuators über eine Drehachse drehbar am Fahrzeug befestigt ist.

Ein Ladebordwandsystem dieser Art ist beispielsweise in der EP-A-0 808 747 beschrieben. Ladebordwandsysteme sind in unterschiedlichstem Aufbau seit langem bekannt und finden insbesondere Anwendung bei Lastkraftfahrzeugen, um mit dem Lastkraftfahrzeug zu transportierende Lasten am Einsatzort von der Ladeplattform des Lastkraftfahrzeuges auf die Fahrbahn, auf dem das Lastkraftfahrzeug steht, absenken zu können, so daß die Last dann anderweitig zum Bestimmungsort verbracht werden kann. Das gleiche gilt für den Beladungsvorgang eines Kraftfahrzeugs, d.h. die Last wird auf die sich auf der Fahrzeugebene befindende Ladebordwand aufgebracht, die Ladebordwand wird auf die Höhe der Ladeplattform des Lastkraftfahrzeugs angehoben und nachfolgend auf die Ladeplattform verbracht.

Bei einigen Konstruktionen des Ladebordwandsystems wird die Ladebordwand, wenn der Entlade- bzw. Beladevorgang beendet ist, aus der Horizontalen, in der sie sich zum Be- und Entladen befand, in die Vertikale verschwenkt, so daß die Ladeplattform zusätzlich als rückwertiger Abschluß der Ladefläche bzw. eines kofferartig ausgestalteten Laderaums dienen kann.

Bei anderen Ausgestaltungen bekannter Ladebordwandsysteme, sogenannter Faltladebordwände, findet kein Verschwenken der Ladebordwand aus der Horizontalen in die Vertikale und umgekehrt statt, vielmehr werden diese nach Abschluß des Be- bzw. Entladevorganges in zusammengeklappter oder gefalteter Form unter die Ladefläche bzw. den hinteren Bereich der Ladefläche eines Lastkraftfahrzeugs verbracht.

Für das Heben und Senken der Ladebordwand in im wesentlichen horizontaler Ausrichtung für das Be- und Entladen von der Ebene der Ladefläche eines Lastkraftfahrzeuges auf den Straßenuntergrund und vom Straßenuntergrund auf die Ebene der Ladefläche wird eine sogenannte Hubaktuatoreinrichtung verwendet, die hydraulisch, pneumatisch, elektrisch oder auf andere geeignete Weise betrieben wird. Für das Verschwenken der Ladebordwand, falls eine solche Möglichkeit vorhanden ist, d.h. für das Öffnen und Schließen des eigentlichen Laderaums aus der Horizontalen in die Vertikale und umgekehrt, wird eine hydraulische, pneumatische, elektrische oder auf andere geeignete Weise betriebene Klappaktuatoreinrichtung verwendet. Ladebordwandsysteme der vorbeschriebenen bekannten Art weisen somit wenigstens zwei Aktuatoreinrichtungen auf, wobei regelmäßig die Hubaktuatoreinrichtung mit dem einen Tragwerk eines regelmäßig - aber nicht zwingend - parallelogrammförmig ausgebildeten Hubund Klapptragwerk zusammenwirkt, wohingegen die Klappaktuatoreinrichtung mit dem anderen Tragwerk des Hub- und Klapptragwerks zusammenwirkt. Eine Klappaktuatoreinrichtung ist aber, wie gesagt, nur dann vorgesehen, wenn tatsächlich eine Klappbewegung der Ladebordwand von der Horizontalen in die Vertikale und umgekehrt nötig ist.

Bei bisher bekannten Ladebordwandsystemen traten beim Be- und Entladevorgang, d.h. unter Einwirkung einer Kraft, die in Abhängigkeit des Gewichts des anzuhebenden bzw. abzusenkenden Transportguts erhebliche Größen aufweisen kann, Probleme dadurch auf, daß infolge der auf der Ladebordwand sich dabei befindenden Last ein Verbiegen der Ladebordwand relativ zur Ladefläche des Lastkraftfahrzeuges auftrat, so daß Spalten zwischen der Ladebordwand und der Ebene der Ladefläche sowohl in horizontaler Richtung als auch in vertikaler Richtung entstanden, die, bezogen auf die Breite der Ladeflächenöffnung, zudem noch erheblich variieren können. Die Folge war, daß insbesondere bei schweren Lasten, die mit der Ladebordwand in vertikaler Richtung, d.h. beim Beund Entladen transportiert werden müssen, regelrechte Schwellen zwischen der Ebene und der Ladebordwand und der Ladefläche des Lastkraftfahrzeuges entstanden, so daß die Last vielfach über diese Schwelle, sei es mit Sackkarren, per Hand oder mittels anderer Hilfseinrichtungen, regelrecht gewuchtet werden mußten.

Durch die im gattungsgemäßen Dokument gemäß der EP-A-0 808 747, das auf die gleiche Anmelderin zurückgeht, vorgeschlagene Lösung sind die bisher aufgetretenen vorbeschriebenen Probleme gelöst worden, d.h. es konnten sich somit keine Spalten in vertikaler und horizontaler Richtung zwischen der Ladebordwand bei horizontaler Ausrichtung relativ zur Ladefläche eines Fahrzeugs ausbilden, wobei diese Lösung auch noch den sehr positiven Effekt hat, daß das gattungsgemäße Ladebordwandsystem konstruktiv außerordentlich einfach ausgestaltet sein kann und auch aufgrund der gewählten Konstruktion auch keine ungleichmäßige Belastung auf das Hubtragwerk ausgeübt wird, so daß dieses über lange Zeiträume stabil bleibt und auch ein notwendiger Wartungsaufwand auf ein Minimum reduziert werden konnte.

Ein Hubtragwerk eines derartigen Ladebordwandsystems hat schon aufgrund des durch die Ladebordwand in horizontaler Stellung auf das Hubtragwerk einwirkenden Eigengewichts ein beträchtliches Drehmoment auf das Hubtragwerk zur Folge und es wirkt somit auf das Tragwerk eine Kraft mit einer beträchtlichen Kraftkomponente in vertikaler Richtung, die bei Erreichen einer Endstellung im Zustand der auf das Niveau der Ladefläche des Lastkraftfahrzeugs anzuhebenden Ladebordwand, d.h. bei an sich maximaler Hubwirkung der Hubaktuatoreinrichtung, so daß noch ein zumindest kleiner vertikaler Absatz zwischen dem Niveau der Ladebordwand und dem Niveau der Ladefläche des Lastkraftfahrzeugs verbleibt. Dazu sei hervorgehoben, daß das Hubtragwerk mit dem Tragarm und dem Hubaktuator einschließlich der Dreh- bzw. Achspunkte der Ladebordwand real kein gänzlich starres System bilden kann, da konstruktions- und werkstoffbedingt immer eine Elastizität und damit eine elastische Verformung der einzelnen Elemente des Hubtragwerks auftritt. Die Elemente des Hubtragwerks insgesamt, insbesondere aber auch der Tragarm des Hubtragwerks, wirken als Federn. Um die durch die Federung bedingte Verformung, die für die Ausbildung des vorbeschriebenen Spaltes verantwortlich ist, zu überwinden, wird die Hubaktuatoreinrichtung zum Erreichen der tatsächlichen Endstellung der Ladebordwand auf gleichem Niveau wie die Ladeplattform des Lastkraftfahrzeugs angehoben, um den durch die elastische Verformung insbesondere des Tragarms des Hubtragwerks bedingten vertikalen Spalt zwischen Ladebordwand und Ladeplattform auszugleichen, d.h. zu Null zu bringen.

Dieses Problem wird bei dem gattungsgemäßen Ladebordwandsystem auf sehr elegante Weise dadurch gelöst, daß neben dem ersten Tragarm ein zweiter Tragarm vorgesehen ist, der an seinem ersten Ende mit dem ersten Tragarm verbunden ist und dessen zweites Ende eine im wesentlichen orthogonal zu den beiden ersten Tragarmen verlaufende Drehachse aufweist, über die der zweite Tragarm drehbar mit der Ladebordwand befestigt ist. Es wird praktisch durch beide Tragarme, die nach Art einer Pinzettenfeder bzw. Federzange miteinander verbunden sind, die Möglichkeit geschaffen, daß durch die Hubaktuatorbetätigung bzw. -bewegung über den Federweg der beiden Tragarme die Ladebordwand definitiv bis zum Erreichen eines gleichen Niveaus bis auf das Niveau der Ladeplattform angehoben werden kann, wodurch die elastische Verformung des Hubtragwerks ausgeglichen wird.

Die bekannten Maßnahmen sind allerdings konstruktiv, obwohl sie eine hervorragende Wirksamkeit zeigen, verhältnismäßig aufwendig.

Es ist deshalb Aufgabe der vorliegenden Erfindung, ein Ladebordwandsystem zu schaffen, mit dem auf einfache aber dennoch exakte Weise die Ladebordwand auch bei größter Nennlast ohne vertikalen Spalt auf das vorbestimmte Niveau einer Ladeplattform eines Fahrzeugs oder dgl. angehoben werden kann, wobei auch Ziel des Ladebordwandsystems ist, bekannte Ladebordwandsysteme damit auf einfache Weise nachrüsten zu können.

Gelöst wird die Aufgabe gemäß der Erfindung dadurch, daß ein Federmittel vorgesehen ist, daß zwischen dem zweiten Ende des Tragarms und einer im wesentlichen orthogonal zum Tragarm verlaufenden Drehachse der Ladebordwand wirkt.

Der Vorteil der erfindungsgemäßen Lösung besteht im wesentlichen darin, daß diese auch eine Federwirkung auf einfache Weise zwischen dem zweiten Ende des Tragarms und der entsprechenden Drehachse der Ladebordwand sicherstellt, d.h. mit einem sehr einfachen Mittel, so daß hohe Werkstoffgüten des Werkstoffs des Hubtragwerks bzw. speziell des Tragarmes nicht erforderlich sind und dieses somit preisgünstig hergestellt und vertrieben werden kann. Zudem hat die erfindungsgemäße Lösung den Vorteil, daß auf einfache Weise dem an der jeweiligen Ladebordwand für den bestimmten Anwendungszweck notwendigen Elastizitätsmodul des Federmittels auf einfache Weise Rechnung getragen werden kann, indem nämlich lediglich das Federmittel entsprechend geeignet ausgewählt wird, ohne daß die Konstruktion des Hubtragwerks im Zusammenwirken mit der Ladebordwand, insbesondere des Tragarms mit der Ladebordwand, verändert zu werden braucht. Die erfindungsgemäß vorgeschlagene Lösung ist auch verhältnismäßig einfach realisierbar.

Als Federmittel kommen grundsätzlich alle geeigneten Federmittel in Frage, beispielsweise Gummifedern, Luft-Stab-Federn, Torsionsfedern, Blattfedern, Spiralfedern, Drehstabfedern oder Schrauben- bzw. Kegelfedern. Vorzugsweise findet jedoch als Federmittel eine Druckfeder Anwendung oder bei einer anderen vorteilhaften Ausgestaltung der Ladebordwand eine hydraulische und/oder pneumatische Feder.

Um auf einfache Weise sicherzustellen, daß zwischen der Drehachse der Ladebordwand und dem zugehörigen zweiten Ende des Tragarms ein geringstmögliches horizontales Spiel, d.h. bezogen auf eine gedachte Ebene, auf der das Fahrzeug mit dem Ladebordwandsystem steht, erreicht wird, ist das Ladebordwandsystem vorzugsweise derart ausgebildet, daß das Federmittel zwischen einem am zweiten Ende des Tragarms befestigten Führungskörper und einem in einer Öffnung des Führungskörpers hin und her bewegbaren Führungselement wirkt. Dabei kann der Führungskörper und die Öffnung im Führungskörper, die als unmittelbare Führung für das darin hin und her bewegbare Führungselement wirkt, im Querschnitt beliebig ausgebildet sein, d.h. es sind rechteckige Querschnitte der Öffnung und des Führungskörpers möglich, es ist aber auch möglich, beispielsweise das Führungselement in einer Führungsöffnung sich hin und her bewegen zu lassen, die einen kreisförmigen Querschnitt aufweist.

An dem dem Führungskörper abgewandten Ende des Führungselements ist vorteilhafterweise ein Achselement angeordnet, das mit seiner Achse die Drehachse der Ladebordwand bildet. Auf diese Weise ist es vorteilhafterweise möglich, das Führungselement und eine Achshülse als gemeinsames Teil auszubilden, wobei die Achshülse die entsprechende Drehachse der Ladebordwand bildet. Es ist aber auch möglich, anstelle der Achshülse am abgewandten Ende des Führungskörpers einen Achsbolzen auszubilden, der in entsprechend ausgebildete Löcher bzw. Lochbuchsen der Ladebordwand eingreift.

Da das Ladebordwandsystem regelmäßig im Zusammenwirken mit Fahrzeugen, an denen es angebracht ist, der rauhen Umgebung ausgesetzt ist, d.h. Feuchtigkeit, Staub, sonstigem Umgebungsschmutz, bisweilen Schnee und Eis und auch Streusalz und dergleichen, wie es im Winter auf Straßen aufgebracht wird, ist es vorteilhaft, das Federmittel mit einem Schutzelement im wesentlichen zu umhüllen, das schnell ausgetauscht werden kann, wenn dieses brüchig, beschädigt oder sonstwie unbrauchbar geworden ist.

Das Schutzelement kann vorzugsweise als elastischer Balgkörper ausgebildet sein, beispielsweise aus elastomerem Werkstoff, beispielsweise Gummi oder Kunststoff.

Der Tragarm des Ladebordwandsystems braucht nicht notwendigerweise aus einem einzigen Tragarm bestehen. Vielmehr kann es vorteilhaft sein, diesen durch zwei im wesentlichen parallel voneinander beabstandete Tragarmelemente auszubilden, wodurch gegebenenfalls auf einfache Weise die Eigenstabilität des Tragarms erhöht werden kann. Der Tragarm selbst kann an sich eine beliebige geeignete Querschnittsform aufweisen, d.h. eine kreisförmige und/oder auch vorzugsweise eine plattenförmige. Bei einer rohrförmigen Ausgestaltung des Tragarmes bzw. gegebenenfalls der beiden parallel voneinander beabstandeten Tragarmelemente kann auf im Handel erhältliche Rohrhalbzeuge zurückgegriffen werden, so daß sich durch Verwendung dieser Rohre eine sehr einfache Herstellbarkeit des Tragarmes bzw. der Tragarme ergibt.

Ähnlich verhält es sich bei im Querschnitt im wesentlichen plattenförmig ausgebildeten Tragarmen, denn dabei lassen sich plattenförmige Halbzeuge verwenden, aus denen die Tragarme entsprechend der gewünschten Form ausgestanzt bzw. ausgeschnitten werden können.

Um die Eigenstabilität des Tragarms bei einer solchen Ausgestaltung zu verbessern, bei der die Tragarme durch zwei voneinander beabstandete Tragarmelemente gebildet werden, sind vorteilhafterweise die Tragarmelemente durch wenigstens ein Stegelement miteinander verbunden.

Die Erfindung wird nun unter Bezugnahme auf die nachfolgenden schematischen Zeichnungen anhand eines Ausführungsbeispiels eingehend beschrieben. Darin zeigen:
- Fig. 1: in perspektivischer Darstellung ein Ladebordwandsystem gemäß der Erfindung, das an horizontalen Stegen des Tragrahmens eines Fahrzeugs befestigt ist, wobei die Ladebordwand sich in abgesenktem Zustand befindet,
- Fig. 2: ein Schema der Elemente des Hubtragwerks und des gegebenenfalls ebenfalls vorhandenen Klapptragwerks sowie des daran angreifenden Hubaktuators und des gegebenenfalls ein Teil des Hubtragwerks bildenden Klappaktuators,
- Fig. 3: in der Seitenansicht eine Teilansicht des zweiten Endes des Tragarms, an dem ein Führungskörper befestigt ist, in dessen Öffnung ein mit dem Federmittel beaufschlagtes hin und her bewegbares Führungselement vorgesehen ist, und
- Fig. 4: in perspektivischer Darstellung der erste Tragarm, gebildet aus zwei Tragarmelementen, an deren zweiten Enden der Führungskörper mit dem in seiner Öffnung hin und her bewegbaren Führungselement befestigt ist.

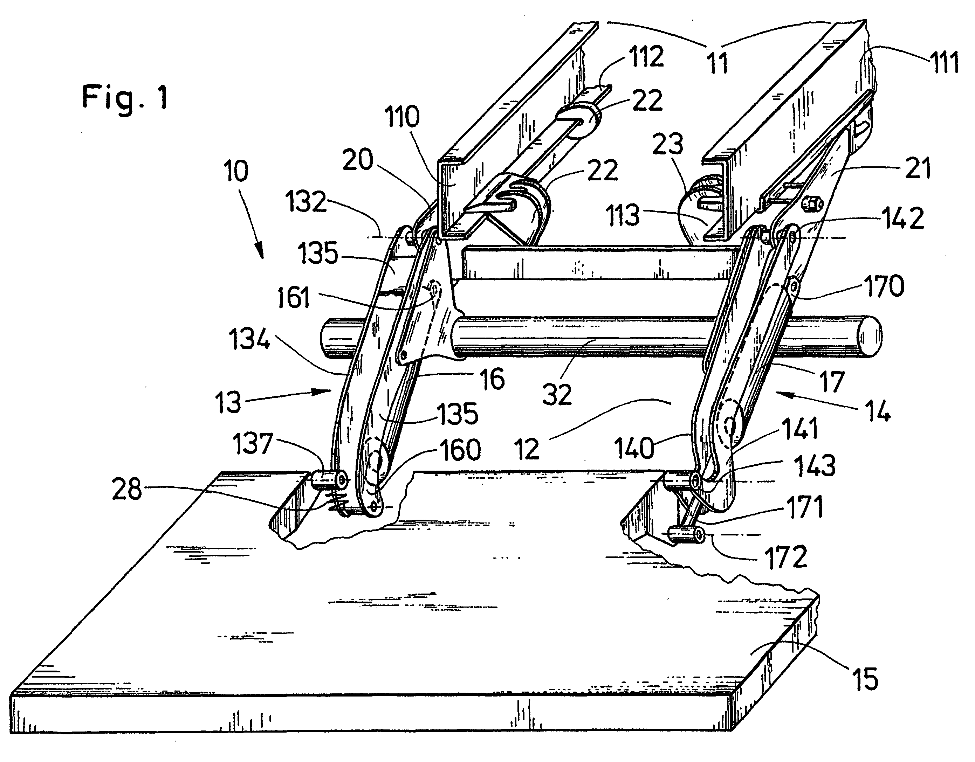

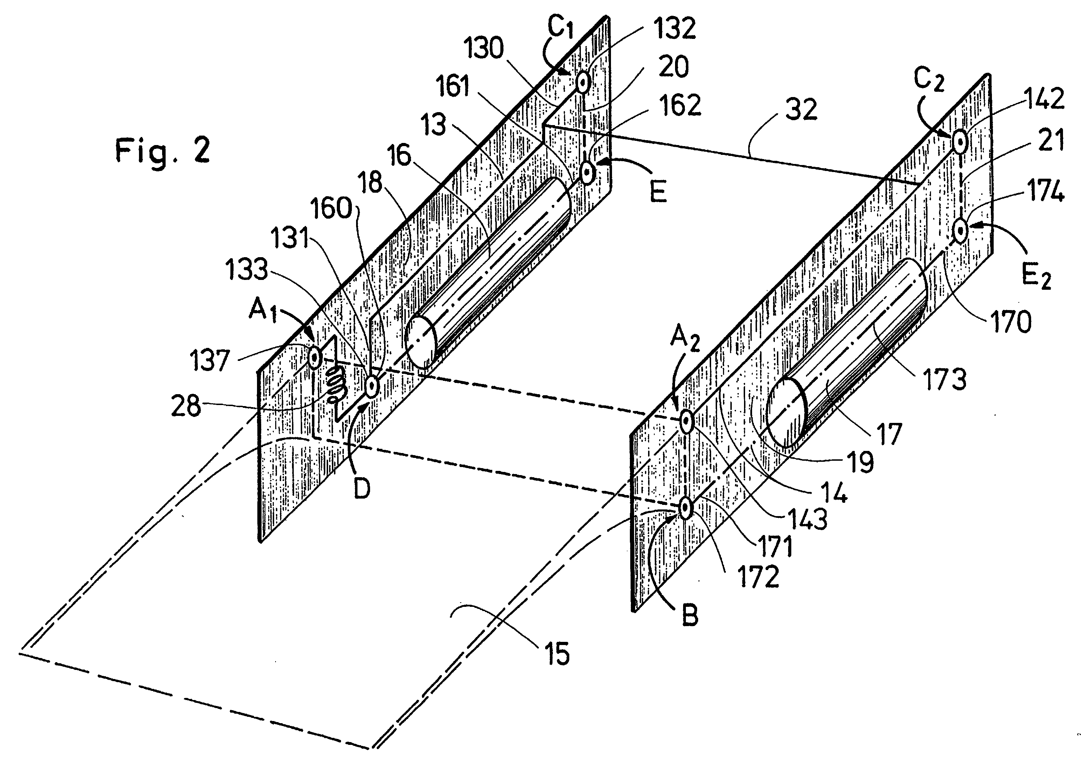

Es wird zunächst Bezug genommen auf das in Fig. 1 dargestellte Ladebordwandsystem 10, das anhand dieser Darstellung bezüglich seines grundsätzlichen Aufbaus beschrieben wird. Das Ladebordwandsystem umfaßt im wesentlichen wenigstens ein Hubtragwerk 12. In der Darstellung von Fig. 1 ist eine spezielle Form des Hubtragwerks 12 vorgesehen, nämlich als gemeinsames Hub- und Klapptragwerk 12. Das dort dargestellte kombinierte Hub- und Klapptragwerk 12 besteht wiederum wenigstens aus einem ersten Tragarm 13 (erstes Tragwerk) und wenigstens aus einem zweiten Tragarm 14 (zweites Tragwerk), die im wesentlichen parallel voneinander beabstandet an einem Fahrzeug 11 über beispielhaft dargestellte Befestigungselemente 20, 21 befestigt werden. Der erste und der zweite Tragarm 13, 14 bilden zusammen mit den Befestigungselementen 20, 21, der zweite Tragarm 14 zusätzlich noch zusammen mit einem Klappaktuator 17, eine parallelogrammförmige Struktur, wie sie insbesondere aus Fig. 2 ersichtlich ist, worauf aber im einzelnen noch weiter unten eingegangen wird. Mit dem ersten und zweiten Tragarm 13, 14 ist eine im wesentlichen plattenförmige Ladebordwand 15 zum Heben und Absenken einer Last (ohne Last dargestellt) und gegebenenfalls auch zum Verschließen eines Stauraums des Fahrzeugs 11 (ebenfalls nicht dargestellt) drehbar verbunden. Mit dem ersten Tragarm 13 wirkt ein Hubaktuator 16 zum Heben und Senken der Ladebordwand 15 zusammen. Der Klappaktuator 17, der zum Verschwenken der Ladebordwand von der Horizontalen in die Vertikale und umgekehrt dient, wirkt mit dem zweiten Tragarm 14 zusammen und ist Teil einer parallelogrammförmigen Struktur.

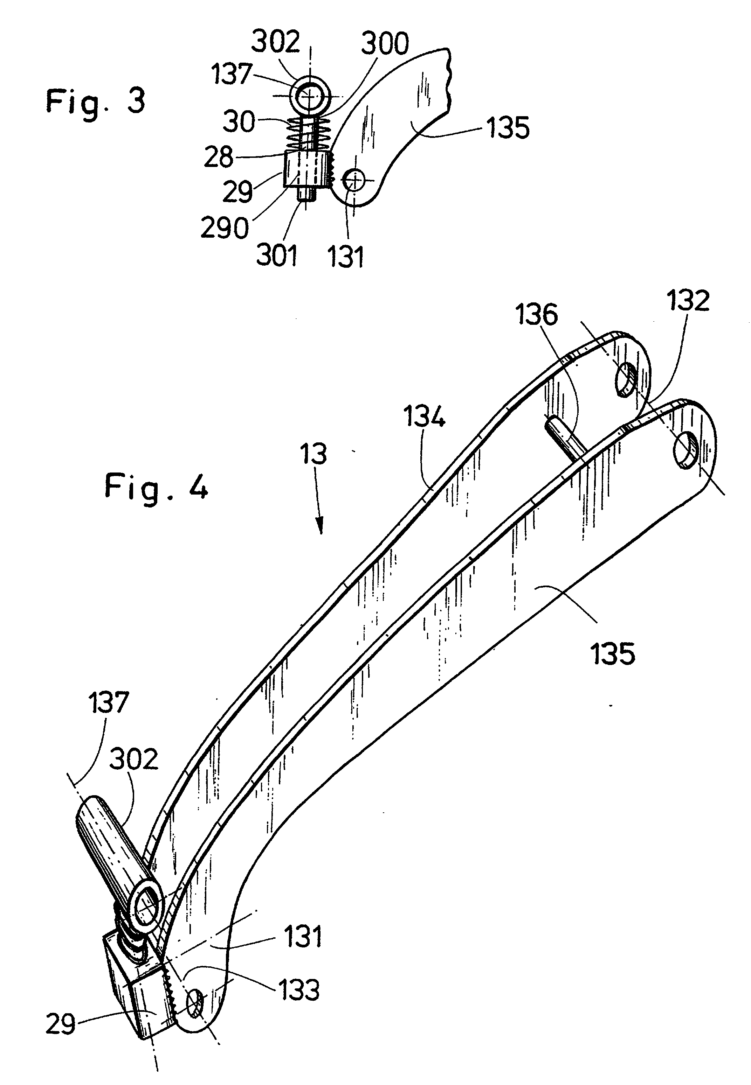

Der erste Tragarm 13, in den Fig. 1 und 2 links dargestellt, umfaßt bei der in den Figuren dargestellten Ausgestaltung zwei im wesentlichen parallel voneinander beabstandete Tragarmelemente 134, 135, die über eine erste Drehachse 132 am Befestigungselement 20 drehbar befestigt sind. Die am entgegengesetzten Ende 131 des ersten Tragarms 13 bzw. der ersten Tragarmelemente 134, 135 ausgebildete zweite Drehachse 133 ist mit dem ersten Ende des Hubaktuators 16 verbunden, vergleiche auch Fig. 4. Das zweite Ende des Hubaktuators 16 ist ebenfalls drehbar am Befestigungselement 20 befestigt. Der Tragarm 13 kann aber als einzelner Tragarm ausgebildet sein.

Der zweite Tragarm 14, der ähnlich wie der erste Tragarm 13 ausgebildet ist, weist gemäß der in den Figuren dargestellten Ausgestaltung ebenfalls zwei im wesentlichen parallel voneinander beabstandete Tragarmelemente 140, 141 auf, die über eine erste Drehachse 142 am Befestigungselement 21 drehbar befestigt sind. Die am anderen Ende der Tragarmelemente 140, 141 vorgesehene zweite Drehachse 143 ist im wesentlichen orthogonal zum ersten Tragarm 140, 141 ausgebildet und verläuft im wesentlichen parallel zur ersten Drehachse 142. Über die Drehachse 143 sind die beiden Tragarmelemente 140, 141 drehbar mit der Ladebordwand 15 verbunden. Der Tragarm 14 kann aber als einzelner Tragarm ausgebildet sein.

Gewissermaßen als ein Schenkel des parallelogrammförmig ausgebildeten zweiten Tragarms 14 ist der schon erwähnte Klappaktuator 17 vorgesehen, vergleiche auch Fig. 2, der mit seinem ersten Ende 170 um eine Drehachse 174 drehbar am Befestigungselement 21 befestigt ist. Mit seinem zweiten Ende 171 ist der Klappaktuator 17 um eine Drehachse 172, die im wesentlichen orthogonal zur Längsachse des Klappaktuators 17 ausgebildet ist, drehbar mit der Ladebordwand 15 verbunden. Die (gedachte) Längsachse 173 verläuft bei der in den Figuren dargestellten Ausgestaltung des Klapptragwerks 12 im wesentlichen in der die Schwenkebene bildende Ebene des zweiten Tragarms 14, vergleiche die zur besseren Darstellung der Ebene die verdunkelt unterlegte Fläche in Fig. 2.

In Fig. 2 ist beispielhaft das Hebeschema des sowohl als Hub- als auch als Klapptragwerk 12 ausgebildeten Tragwerks dargestellt, d.h. des ersten Tragarms 13 und des zweiten Tragarms 14, in Verbindung mit dem daran angreifenden Hubaktuator 16 sowie dem zum zweiten Tragwerk integral gehörenden Klappaktuator 17. Bei der Darstellung gemäß Fig. 2 sind die Kräfteeinleitungspunkte des Hubaktuators 16 und des Klappaktuators 17 in das Hub- und Klapptragwerk 12 in der jeweiligen Ebene 18 der Drehpunkte A₁, C₁, D, E₁ der Drehachsen 137, 132, 133, 162 des ersten Tragarms 13 bzw. in der Ebene 19 der Drehpunkte A₂, B, C₂, E₂ der Drehachsen 143, 172, 142, 174 des zweiten Tragarms 14 liegend ausgebildet. Es sei aber darauf hingewiesen, daß weder die vorgenannten Kräfteeinleitungspunkte des Hubaktuators 16 noch die Kräfteeinleitungspunkte des Klappaktuators 17 zwingend für die Verwirklichung der Erfindung in den dazu voraufgeführten Drehpunkten der Drehachsen liegen müssen. Dieses kann zwar vorteilhaft sein, es sind aber auch Konstruktionen des Ladebordwandsystems 10 möglich, in denen die Kräfteeinleitungspunkte z.B. des Hubaktuators 16 in das Hubtragwerk in der Ebene 18 der Drehpunkte A₁, C₁, D, E₁ der Drehachsen 137, 132, 133, 162 des ersten Tragarms 13 entweder überhaupt nicht, teilweise oder vollständig liegen und/oder, soweit an dem Ladebordwandsystem 10 auch ein Klapptragwerk 12 vorhanden ist, die Drehpunkte A₂, B, C₂, E₂ der Drehachsen 143, 172, 142, 174 in der Ebene 19 des zweiten Tragarms 14 überhaupt nicht, wenigstens teilweise oder vollständig liegen.

Teil der parallelogrammförmig strukturierten Tragarme 13, 14 sind die jeweiligen Befestigungselemente 20, 21, vergleiche Fig. 1. Die Befestigungselemente 20, 21 können aus flachen, blechförmigen Elementen ausgebildet sein, in denen die Achsbuchsen der Drehachsen 132, 162, 142, 174 auf einfache Weise aufgenommen werden können. Die Befestigung der Befestigungselemente 20, 21 am Tragrahmen 110, 111 des Fahrzeugs 11 kann über Schraubverbindungen oder gesonderte Klemmelemente 22, 23 erfolgen.

Es wird Bezug genommen auf Fig. 4, in der der erste Tragarm 13, bestehend aus zwei Tragarmelementen 134, 135, dargestellt ist. Am zweiten Ende 131 des Tragarms 13 bzw. der Tragarmelemente 134, 135 ist ein Führungskörper 29 befestigt. Der Führungskörper 29 ist beispielswelse mittels Schweißung oder anderer geeigneter Verbindungsmittel mit dem zweiten Ende 131 des Tragarms 13 verbunden. Der Führungskörper 29 weist eine Öffnung 290 auf, vergleiche Fig. 4, in der ein hier stiftförmig ausgebildetes Führungselement 30 geführt hin und her bewegt werden kann. Das Führungselement 30 weist ein erstes Ende 300 und ein zweites Ende 301 auf. Das erste Ende 300 des Führungselements 30 weist ein Achselement 302 auf, wobei die Achse des Achselements 302 die Drehachse 137 mit der Ladebordwand 15 bildet, vergleiche auch die Fig. 1 und 2. Das Führungselement 30 ist derart relativ zum Führungskörper 29 arretiert, daß es aus der Öffnung 290 nicht heraustreten kann. Ein Federmittel 28, vergleiche Fig. 2, ist zwischen dem Führungskörper 29 und dem dem Führungskörper 29 abgewandten Ende 300 des Führungselements vorgesehen und wirksam. Das Federmittel 28 wirkt somit zwischen dem zweiten Ende 131 des Tragarms und der im wesentlichen orthogonal zum Tragarm 12 verlaufenden Drehachse 137 der Ladebordwand 15. Das Federmittel 28 kann mittels eines Schutzelementes 31, das beispielsweise als elastischer Balgkörper ausgebildet sein kann, umhüllt sein.

Das Anheben bzw. Absenken der Ladebordwand 15 mittels des erfindungsgemäßen Ladebordwandsystems 10 erfolgt mit dem Hubaktuator 16, der beispielsweise in Form einer hydraulisch und/oder pneumatisch betriebenen Hubzylindereinrichtung ausgebildet sein kann, d.h. in Form einer konventionellen Kolben-Zylinder-Einrichtung. Gleiches gilt, soweit das Ladebordwandsystem 10 auch imstande sein soll, die Ladebordwand 15 aus der Horizontalen in die Vertikale zu klappen, für den Klappaktuator 17. Es ist aber auch möglich, den Hubaktuator 16 und/oder den Klappaktuator 17 in Form von elektrisch betriebenen Aktuatoren auszubilden, d.h. jeder Aktuator kann grundsätzlich auch elektromotorisch angetrieben und entsprechend konstruktiv ausgebildet sein.

Das Anheben der Ladebordwand 15 mit dem erfindungsgemäßen Ladebordwandsystem erfolgt an und für sich auf bekannte, konventionelle Weise, d.h. der Hubaktuator 16 wird betätigt, so daß infolge dessen der Tragarm 13 und über die auch als Unterfahrschutz ausgebildete Traverse 32 auch der zweite Tragarm 14 angehoben werden. In seiner quasi ersten oberen Endstellung des Hubaktuators 16 besteht noch ein vertikaler Absatz zwischen der Ebene, die durch die horizontal ausgerichtete Ladebordwand 15 gebildet wird, und der Ebene, die durch eine hier nicht gesondert dargestellte Ladefläche des Fahrzeugs 11 gebildet wird, auf deren Niveau die Ladebordwand 15 angehoben werden muß. Gegen die Kraft der Druckfeder 28 wird dann der Hubaktuator 16 noch weiter betätigt und die Ladebordwand 15 wird gegen die Kraft der Feder noch weiter angehoben, bis das Niveau der Ladebordwand 15 dem Niveau der Ladeebene des Fahrzeugs 11 entspricht.

Falls das Hubtragwerk 12 auch als Hub- und Klapptragwerk 12 ausgebildet ist, kann, da in diesem Falle auch die Klappaktuatoreinrichtung 17 Teil des parallelogrammförmigen zweiten Tragarms 14 ist, eine auf an sich bekannte Weise erfolgende Klappbewegung auf die Ladebordwand 15 ausgeübt werden, so daß diese von der Horizontalen in die Vertikale verschwenkt werden kann und durch geeignete Steuerung des Klappaktuators 17 wieder zurück in die horizontale Ebene. Das Absenken der Ladebordwand 15 erfolgt über den Hubaktuator wiederum auf an sich bekannte Weise.

### Bezugszeichenliste

- 10: Ladebordwandsystem
- 11: Fahrzeug
- 110: Tragrahmen
- 111: Tragrahmen
- 12: Hubtragwerk
- 112: horizontaler Steg
- 113: horizontaler Steg
- 13: erster Tragarm
- 130: erstes Ende Tragarm
- 131: zweites Ende Tragarm
- 132: erste Drehachse
- 133: zweite Drehachse
- 134: Tragarmelement
- 135: Tragarmelement
- 136: Stegelement
- 137: Drehachse
- 14: zweiter Tragarm
- 140: Tragarmelement
- 141: Tragarmelement
- 142: erste Drehachse
- 143: zweite Drehachse
- 15: Ladebordwand
- 16: Hubaktuator
- 160: erstes Ende
- 161: zweites Ende
- 162: Drehachse
- 17: Klappaktuator
- 170: erstes Ende
- 171: zweites Ende
- 172: Drehachse
- 173: Längsachse
- 174: Drehachse
- 18: Ebene (erstes Tragwerk)
- 19: Ebene (zweites Tragwerk)
- 20: Befestigungselement
- 22: Klemmelement
- 23: Klemmelement
- 28: Federmittel
- 29: Führungskörper
- 290: Öffnung Führungskörper
- 30: Führungselement
- 300: erstes Ende Führungselement
- 301: zweites Ende Führungselement
- 302: Achsenelement
- 303: Achse
- 31: Schutzelement
- 32: Traverse

## Patentansprüche

1. Ladebordwandsystem (10) zur Befestigung an Fahrzeugen (11), insbesondere Lastkraftfahrzeugen, umfassend ein Hubtragwerk (12), eine im wesentlichen plattenförmige Ladebordwand (15) zum Heben und Absenken einer Last und wenigstens einen Hubaktuator (16) zum Heben und Senken der Ladebordwand (15), wobei das Hubtragwerk (12) wenigstens einen Tragarm (13) umfaßt, der mit seinem ersten Ende (130) über eine erste Drehachse (132) am Fahrzeug (11) drehbar befestigt ist und über eine am gegenüberliegenden zweiten Ende (131) des Tragarms (13) angeordnete zweite Drehachse (133) mit einem ersten Ende (160) des Hubaktuators (16) drehbar befestigt ist und wobei das zweite Ende (161) der Hubaktuatoreinrichtung über eine Drehachse (162) drehbar am Fahrzeug befestigt ist, **dadurch gekennzeichnet, daß** ein Federmittel (28) vorgesehen ist, das zwischen dem zweiten Ende (131) des Tragarms (13) und einer im wesentlichen orthogonal zum Tragarm (13) verlaufenden Drehachse (137) der Ladebordwand (15) wirkt.

2. Ladebordwandsystem nach Anspruch 1, **dadurch gekennzeichnet, daß** das Federmittel (28) eine Druckfeder ist.

3. Ladebordwandsystem nach einem oder beiden der Ansprüche 1 oder 2, **dadurch gekennzeichnet, daß** das Federmittel (28) eine hydraulische und/oder pneumatische Feder ist.

4. Ladebordwandsystem nach einem oder mehreren der Ansprüche 1 bis 3, **dadurch gekennzeichnet, daß** das Federmittel (15) zwischen einem am zweiten Ende (131) des Tragarms (13) befestigten Führungskörper (29) und einem in einer Öffnung (290) des Führungskörpers (29) hin und her bewegbaren Führungselement (30) wirkt.

5. Ladebordwandsystem nach Anspruch 4, **dadurch gekennzeichnet, daß** an dem dem Führungskörper (29) angewandten Ende (300) des Führungselements (30) ein Achselement (302) angeordnet ist, das mit seiner Achse (303) die Drehachse (137) der Ladebordwand (15) bildet.

6. Ladebordwandsystem nach einem oder mehreren der Ansprüche 1 bis 5, **dadurch gekennzeichnet, daß** das Federmittel (28) mit einem Schutzelement (31) im wesentlichen umhüllt ist.

7. Ladebordwandsystem nach Anspruch 6, **dadurch gekennzeichnet, daß** das Schutzelement (31) als elastischer Balgkörper ausgebildet ist.

8. Ladebordwandsystem nach einem oder mehreren der Ansprüche 1 bis 7, **dadurch gekennzeichnet, daß** der Tragarm (13) durch zwei im wesentlichen parallel voneinander beabstandete Tragarmelemente (134, 135) gebildet wird.

9. Ladebordwandsystem nach einem oder mehreren der Ansprüche 1 bis 8, **dadurch gekennzeichnet, daß** der Tragarm (13) im Querschnitt im wesentlichen rohrförmig ausgebildet ist.

10. Ladebordwandsystem nach einem oder mehreren der Ansprüche 1 bis 9, **dadurch gekennzeichnet, daß** der Tragarm (13) im Querschnitt im wesentlichen plattenförmig ausgebildet ist.

11. Ladebordwandsystem nach einem oder mehreren der Ansprüche 8 bis 9, **dadurch gekennzeichnet, daß** die Tragarmelemente (134, 135) durch wenigstens ein Stegelement (136) miteinander verbunden sind.

## Claims

1. Tail-gate lift system (10) for attachment to vehicles (11), in particular heavy goods vehicles, comprising a lifting load-bearing structure (12), an essentially platform-shaped tail-gate lift (15) for raising and lowering a load and at least one lifting actuator (16) to raise and lower the tail-gate lift (15), whereby the lifting load-bearing structure (12) comprises at least one load-bearing arm (13) attached rotatably to the vehicle (11) by its first end (130) via a first axis of rotation (132) and attached rotatably to a first end (160) of the lifting actuator (16) via a second axis of rotation (133) arranged at the opposite second end (131) of the load-bearing arm (13), and whereby the second end (161) of the lifting actuator device is attached rotatably onto the vehicle via an axis of rotation (162), **characterized in that** there is provided a spring means (28) that acts between the second end (131) of the load-bearing arm (13) and an axis of rotation (137) of the tail-gate lift (15) running essentially at right angles to the load-bearing arm (13).

2. Tail-gate lift system according to Claim 1, **characterized in that** the spring means (28) is a compression spring.

3. Tail-gate lift system according to one or both of the Claims 1 or 2, **characterized in that** the spring means (28) is a hydraulic and/or pneumatic spring.

4. Tail-gate lift system according to one or more of the Claims 1 to 3, **characterized in that** the spring means (28) acts between a guide body (29) attached at the second end (131) of the load-bearing arm (13) and a guide element (30) that is movable backwards and forwards in an opening (290) of the guide body (29).

5. Tail-gate lift system according to Claim 4, **characterized in that** there is arranged on the end (300) of the guide element (30) used at the guide body (29) an axis element (302) which with its axis (303) forms the axis of rotation (137) of the tail-gate lift (15).

6. Tail-gate lift system according to one or more of the Claims 1 to 5, **characterized in that** the spring means (28) is essentially sheathed with a protective element (31).

7. Tail-gate lift system according to Claim 6, **characterized in that** the protective element (31) is constructed as an elastic bellows body.

8. Tail-gate lift system according to one or more of the Claims 1 to 7, **characterized in that** the load-bearing arm (13) is formed from two load-bearing arm elements (134, 135) essentially parallel and spaced a distance apart from one another.

9. Tail-gate lift system according to one or more of the Claims 1 to 8, **characterized in that** the load-bearing arm (13) is constructed with an essentially tubular cross-section.

10. Tail-gate lift system according to one or more of the Claims 1 to 8, **characterized in that** the load-bearing arm (13) is constructed with an essentially plate-like cross-section.

11. Tail-gate lift system according to one or more of the Claims 8 to 9, **characterized in that** the load-bearing arm elements (134, 135) are connected to one another by at least one rib element (136).

## Revendications

1. Système de hayon élévateur (10) pour fixation sur des véhicules (11), en particulier des camions, comprenant un mécanisme élévateur (12), un hayon élévateur (15) essentiellement en forme de plateau pour le levage et l'abaissement d'une charge et au moins un vérin de levage (16) pour le levage et l'abaissement du hayon élévateur (15), le mécanisme élévateur (12) comprenant au moins un bras porteur (13), qui est fixé mobile en rotation sur le véhicule (11) avec sa première extrémité (130) par un premier axe de rotation (132) et qui est fixé mobile en rotation par un deuxième axe de rotation (133) à la deuxième extrémité (131) de bras porteur (13) sur une première extrémité (160) du vérin de levage (16) et la deuxième extrémité (161) du dispositif à vérin de levage étant fixée mobile en rotation par un axe de rotation (162) sur le véhicule, **caractérisé en ce qu'**un ressort (28) est prévu, qui agit entre la deuxième extrémité (131) du bras porteur (13) et un axe de rotation (137) s'étendant essentiellement orthogonalement par rapport au bras porteur (13) du hayon élévateur (15).

2. Système de hayon élévateur selon la revendication 1, **caractérisé en ce que** le ressort (28) est un ressort de compression.

3. Système de hayon élévateur selon une des revendications 1 ou 2, ou selon les deux, **caractérisé en ce que** le ressort (28) est un ressort hydraulique et / ou pneumatique.

4. Système de hayon élévateur selon une ou plusieurs des revendications 1 à 3, **caractérisé en ce que** le ressort (28) agit entre un guide (29) fixé à la deuxième extrémité (131) du bras porteur (13) et un élément de guidage (30) mobile dans un sens et dans l'autre dans une ouverture (290) dans le guide (29).

5. Système de hayon élévateur selon la revendication 4, **caractérisé en ce qu'**à l'extrémité (300) de l'élément de guidage (30) tournée vers le guide (29) est disposé un palier d'axe (302), qui constitue avec son axe (303) l'axe de rotation (137) du hayon élévateur (15).

6. Système de hayon élévateur selon une ou plusieurs des revendications 1 à 5, **caractérisé en ce que** le ressort (28) est entouré en plus grande partie par un protecteur (31).

7. Système de hayon élévateur selon la revendication 6, **caractérisé en ce que** le protecteur (31) est configuré comme soufflet élastique.

8. Système de hayon élévateur selon une ou plusieurs des revendications 1 à 7, **caractérisé en ce que** le bras porteur (13) est formé par deux éléments de bras porteur (134, 135) écartés essentiellement parallèlement l'un de l'autre.

9. Système de hayon élévateur selon une ou plusieurs des revendications 1 à 8, **caractérisé en ce que** le bras porteur (13), en section, est configuré essentiellement en forme de tube.

10. Système de hayon élévateur selon une ou plusieurs des revendications 1 à 9, **caractérisé en ce que** le bras porteur (13), en section, est configuré essentiellement en forme de plaque.

11. Système de hayon élévateur selon une ou plusieurs des revendications 8 à 9, **caractérisé en ce que** les éléments de bras porteur (134, 135) sont reliés par au moins une entretoise (136).
